# FASCICULE DE BREVET EUROPEEN

(11) **EP 4 301 969 B1**
(45) Date de publication et mention de la délivrance du brevet: **04.12.2024**
(21) Numéro de dépôt: 22708112.2
(22) Date de dépôt: 24.02.2022
(51) Int. Cl.: F02C 7/04, F02K 1/66

(54) **ENTRÉE D'AIR DE NACELLE D'ENSEMBLE PROPULSIF D'AÉRONEF POUR FAVORISER UNE PHASE DE POUSSÉE ET UNE PHASE D'INVERSION DE POUSSÉE ET SON PROCÉDÉ D'UTILISATION**
LUFTEINLASS EINER GONDEL EINER FLUGZEUGANTRIEBSANORDNUNG ZUR FÖRDERUNG EINER SCHUBPHASE UND EINER SCHUBUMKEHRPHASE UND VERFAHREN ZUR VERWENDUNG DAVON
AIR INLET OF A NACELLE OF AN AIRCRAFT PROPULSION ASSEMBLY FOR PROMOTING A THRUST PHASE AND A THRUST REVERSAL PHASE, AND METHOD FOR USING SAME

(30) Priorité: 01.03.2021 FR 2101970
(43) Date de publication de la demande: 10.01.2024
(73) Titulaire: SAFRAN AIRCRAFT ENGINES, 75015 Paris (FR)
(72) Inventeur: CHERAGA, Yacine, 77550 MOISSY-CRAMAYEL (FR); MINCU, Daniel-Ciprian, 77550 MOISSY-CRAMAYEL (FR)
(74) Mandataire: Argyma
(86) Numéro de dépôt international: PCT/EP2022/054590
(87) Numéro de publication internationale: WO 2022/184530

(56) Documents cités:
- WO-A1-2019/158876
- CN-A- 101 716 995
- FR-A1- 3 095 194
- US-A1- 2017 175 627

## Description

### Domaine technique

La présente invention concerne le domaine des ensembles propulsifs d'aéronef et vise plus particulièrement une entrée d'air de nacelle d'ensemble propulsif d'aéronef.

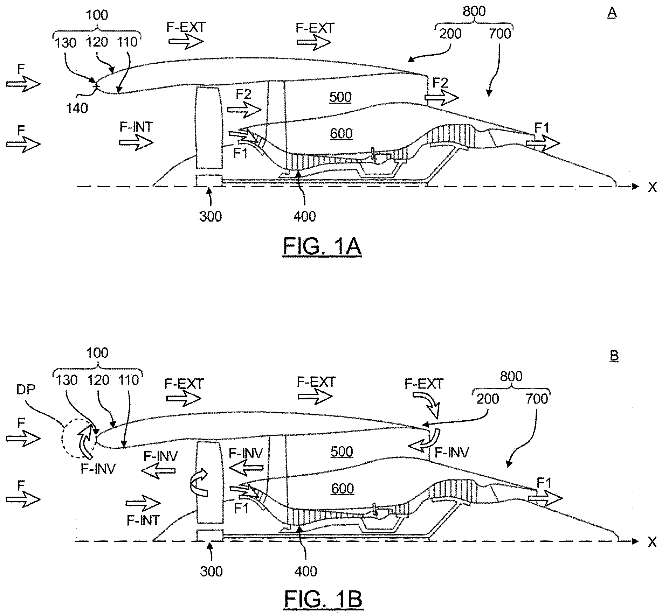

De manière connue, en référence à la [Fig.1A], un ensemble propulsif d'aéronef 800 s'étend selon un axe longitudinal X orienté d'amont en aval et comprend une turbomachine 700 et une nacelle 200. La turbomachine 700 s'étend selon l'axe longitudinal X et est configurée pour permettre la propulsion de l'aéronef à partir de l'accélération d'un flux d'air intérieur F-INT circulant d'amont en aval dans la turbomachine 700. La nacelle 200 s'étend quant à elle extérieurement autour de la turbomachine 700 selon l'axe longitudinal X et permet de guider le flux d'air intérieur F-INT dans la turbomachine 700. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

De manière connue, comme illustré sur la [Fig.1A], la turbomachine 700 est de type à double flux et comprend à l'amont une soufflante 300 montée rotative autour de l'axe longitudinal X pour accélérer le flux d'air intérieur F-INT d'amont en aval. La turbomachine 700 comprend également, en aval de la soufflante 300, une veine primaire 400, radialement intérieure, et une veine secondaire 500, radialement extérieure, qui sont séparées par un carter 600. Le carter 600 est configuré pour guider une première partie du flux d'air intérieur F-INT, dite flux d'air primaire F1, dans la veine primaire 400 pour la combustion du carburant et une deuxième partie du flux d'air intérieur F-INT, dite flux d'air secondaire F2, dans la veine secondaire 500 afin de générer la poussée de la turbomachine 700.

De manière connue, toujours en référence à la [Fig.1A], la nacelle 200 s'étend de manière radialement extérieure à la soufflante 300 et délimite de manière radialement extérieure la veine secondaire 500. La nacelle 200 comprend à son extrémité amont une entrée d'air 100 s'étendant de manière périphérique autour de l'axe longitudinal X. L'entrée d'air 100 comprend une paroi intérieure 110 tournée vers l'axe longitudinal X et une paroi extérieure 120 opposée à la paroi intérieure 110, reliées ensemble à l'amont par une lèvre d'entrée d'air 130. Comme illustré sur la [Fig.1A], la lèvre d'entrée d'air 130 présente en coupe radiale un profil arrondi aérodynamique qui permet de séparer un flux d'air amont F en le flux d'air intérieur F-INT guidé par la paroi intérieure 110 et un flux d'air extérieur F-EXT guidé par la paroi extérieure 120. La lèvre d'entrée d'air 130 comporte un bord d'attaque 140, défini dans chaque coupe radiale par le point de la lèvre d'entrée d'air 130 situé le plus en amont, l'ensemble des points formant une courbe fermée autour de l'axe longitudinal X.

En référence à la [Fig.1B], pour réduire la distance de freinage d'un aéronef, notamment lors de l'atterrissage, il est connu de modifier l'orientation du flux d'air dans la veine secondaire 500 de manière à réaliser une phase d'inversion de poussée B. On distingue par la suite une phase de poussée A ([Fig.1A]) dans laquelle le flux d'air secondaire F2 circule d'amont en aval dans la veine secondaire 500 et une phase d'inversion de poussée B ([Fig.1B]) dans laquelle y circule un flux d'air inverse F-INV d'aval en amont. On précise que lors d'une phase d'inversion de poussée B, un flux d'air intérieur F-INT provenant du flux d'air amont F circule d'amont en aval au pied de la soufflante 300 pour alimenter le flux d'air primaire F1 de même qu'en phase de poussée A. Le flux d'air primaire F1 peut également être alimenté par une partie du flux d'air inverse F-INV qui contourne le carter 600.

Pour réaliser la phase d'inversion de poussée, il est connu d'obstruer au moins partiellement la veine secondaire 500, en aval de la soufflante 300, et de conjointement découvrir des grilles logées dans la nacelle 200 afin de former le flux d'air inverse F-INV orienté inversement au flux d'air secondaire F2. Un tel système d'inversion de poussée présente toutefois l'inconvénient d'augmenter la masse de l'ensemble propulsif d'aéronef 800, notamment pour une nacelle 200 de diamètre important utilisée dans les ensembles propulsifs d'aéronef à fort taux de dilution, à savoir dont le rapport de la masse du flux d'air secondaire F2 sur la masse du flux d'air primaire F1 est supérieur à 16.

En référence à la [Fig.1B], pour des ensembles propulsifs d'aéronef à fort taux de dilution, il est connu de prévoir une soufflante 300 à calage variable, connue sous sa dénomination anglaise « Variable Pitch Fan » d'abréviation « VPF », qui comprend des aubes dont l'angle de calage est piloté de manière à inverser le sens de circulation du flux d'air dans la veine secondaire 500. En pratique, lors d'une phase d'inversion de poussée B, le flux d'air inverse F-INV circule d'aval en amont dans la veine secondaire 500 puis traverse la soufflante 300 et est guidé vers l'amont par la paroi intérieure 110 de l'entrée d'air 100. Le flux d'air inverse F-INV s'oppose alors au flux d'air amont F, notamment de manière radialement extérieure à proximité de la nacelle 200, ce qui permet un freinage. Le flux d'air inverse F-INV rejoint ensuite le flux d'air extérieur F-EXT qui est admis par l'extrémité aval de la nacelle 200 dans la veine secondaire 500.

Dans les faits, il est observé que le flux d'air inverse F-INV reste attaché à l'entrée d'air 100 lorsqu'il rejoint le flux d'air extérieur F-EXT, c'est-à-dire qu'il épouse le contour de l'entrée d'air 100 sans se décoller des parois intérieure 110 et extérieure 120, un tel phénomène étant connu sous le terme « d'effet Coanda ». Un tel phénomène tend à accélérer le flux d'air inverse F-INV au niveau de l'entrée d'air 100 ce qui génère une dépression locale DP à l'origine d'un effort s'opposant à l'inversion de poussée. Un tel phénomène est ainsi susceptible de réduire les performances de la turbomachine 700 en phase d'inversion de poussée B, ce qui est indésirable.

Pour augmenter les performances de la turbomachine 700 lors d'une phase d'inversion de poussée B, il est connu par les demandes de brevet FR1904087A1 et FR1904094A1 de monter de manière mobile respectivement des organes de déviation et des aubes de redresseur sur l'entrée d'air, qui sont déployés lors d'une phase d'inversion de poussée B et escamotés lors d'une phase de poussée A. Les demandes de brevet FR1904089A1 et FR1904096A1 enseignent alternativement de rendre respectivement mobile ou élastiquement déformable une portion de l'entrée d'air lors de la phase d'inversion de poussée B. La demande de brevet FR1904092A1 enseigne quant à elle de former des conduites internes dans l'entrée d'air qui sont ouvertes lors d'une phase d'inversion de poussée B pour détourner une partie du flux d'air inverse F-INV. Toutes ces solutions permettent avantageusement de modifier le profil arrondi de l'entrée d'air uniquement lors d'une phase d'inversion de poussée B pour éviter la formation d'une dépression locale DP, sans réduire les performances en phase de poussée A. De telles solutions présentent toutefois l'inconvénient de nécessiter une entrée d'air d'architecture à double profil complexe, coûteuse et nécessitant d'être actionnée, ce qui la rend sujette à une éventuelle défaillance.

De manière incidente, il est connu par la demande de brevet US20190128214A1 une tuyère et une sortie d'air de nacelle comportant des chevrons permettant de générer localement des tourbillons d'air pour favoriser l'admission au niveau de la sortie d'air lors d'une phase d'inversion de poussée. Une telle sortie d'air et une telle tuyère ne permettent pas d'agir sur l'effet Coanda au niveau de l'entrée d'air. Les documents WO2019/158876 A1, US 2017/175627 A1 et CN 101 716 995 A décrivent encore d'autres turboréacteurs.

L'invention vise ainsi à proposer une entrée d'air de nacelle d'ensemble propulsif d'aéronef permettant de favoriser les performances de la turbomachine à la fois lors d'une phase de poussée et d'inversion de poussée et présentant une architecture simple et robuste.

### PRESENTATION DE L'INVENTION

L'invention concerne une entrée d'air de nacelle d'ensemble propulsif d'aéronef, ledit ensemble propulsif d'aéronef s'étendant selon un axe longitudinal orienté d'amont en aval et comprenant une turbomachine comprenant une veine primaire radialement intérieure et une veine secondaire radialement extérieure configurées pour guider d'amont en aval respectivement un flux d'air primaire et un flux d'air secondaire lors d'une phase de poussée, ladite turbomachine comprenant à l'amont une soufflante montée rotative autour de l'axe longitudinal, ledit ensemble propulsif d'aéronef comprenant des moyens d'inversion de poussée configurés pour modifier le flux d'air secondaire en un flux d'air inverse circulant d'aval en amont dans la veine secondaire lors d'une phase d'inversion de poussée, ladite nacelle s'étendant extérieurement autour de la turbomachine et comprenant à son extrémité amont l'entrée d'air, ladite entrée d'air s'étendant de manière périphérique autour de l'axe longitudinal et comprenant une paroi intérieure tournée vers l'axe longitudinal et une paroi extérieure opposée à la paroi intérieure qui sont reliées à l'amont par une lèvre d'entrée d'air.

L'invention est remarquable en ce que :
- la lèvre d'entrée d'air comporte une épaisseur définie radialement par rapport à l'axe longitudinal et comprend une pluralité de portions épaisses et une pluralité de portions fines réparties alternativement sur la circonférence de la lèvre d'entrée d'air,
- chaque portion épaisse comporte un bord d'attaque amont configuré pour séparer un flux d'air amont circulant d'amont en aval en un flux d'air extérieur guidé par la paroi extérieure et un flux d'air intérieur guidé par la paroi intérieure, afin de favoriser une phase de poussée,
- chaque portion fine comporte un bord d'attaque aval, situé longitudinalement en aval de chaque bord d'attaque amont, configuré pour décoller le flux d'air inverse au niveau de la lèvre d'entrée d'air, afin de favoriser une phase d'inversion de poussée.

Grâce à l'invention, l'entrée d'air comporte une structure fixe avec deux profils différents, ce qui permet à l'entrée d'air de favoriser les performances à la fois lors d'une phase de poussée et lors d'une phase d'inversion de poussée avec une solution simple, pratique et économique. Plus précisément, l'entrée d'air comporte un profil épais situé à l'amont, que rencontre en premier le flux d'air amont circulant d'amont en aval, ainsi qu'un profil fin situé à l'aval, que rencontre en premier le flux d'air inverse circulant d'aval en amont. Le profil épais facilite la séparation du flux d'air amont en un flux d'air intérieur et un flux d'air extérieur circulant respectivement intérieurement et extérieurement à la nacelle, et favorise par conséquent l'admission lors d'une phase de poussée. Le profil fin favorise quant à lui le décollement du flux d'air inverse de la lèvre d'entrée d'air pour éviter l'apparition de l'effet Coanda, et donc augmenter les performances lors d'une inversion de poussée. Les portions épaisses formant ensemble le profil épais sont avantageusement réparties sur toute la circonférence de la lèvre d'entrée d'air pour agir de manière globale sur le flux d'air amont. De même, les portions fines formant ensemble le profil fin sont avantageusement réparties sur toute la circonférence de la lèvre d'entrée d'air pour agir de manière globale sur le flux d'air inverse. Une lèvre d'entrée d'air d'architecture non mobile présente avantageusement une meilleure durée de vie et simplifie la maintenance.

Selon un aspect de l'invention, la lèvre d'entrée d'air comprend une pluralité de portions de jonction s'étendant entre chaque portion épaisse et chaque portion fine, chaque portion de jonction comportant un bord d'attaque de jonction, de manière à décoller le flux d'air inverse en giration, afin de favoriser une phase d'inversion de poussée. De préférence, chaque portion de jonction s'étend longitudinalement entre le bord d'attaque amont et le bord d'attaque aval adjacents. De telles portions de jonction permettent avantageusement d'assurer la continuité entre les portions épaisses et les portions fines, ce qui permet de préserver l'aérodynamisme de l'entrée d'air. De telles portions de jonction assurent également, de manière complémentaire aux portions fines, le décollement du flux d'air inverse, en particulier lorsqu'il est en giration.

Selon un aspect de l'invention, chaque bord d'attaque de jonction s'étend, en projection dans un plan tangentiel à la lèvre d'entrée d'air, selon un axe de décollement formant avec l'axe longitudinal un angle compris entre 35° et 70°. En pratique, le flux d'air inverse comporte une giration générée lors de son passage à travers la soufflante et s'écoule ainsi selon une direction formant un angle compris entre 30° et 45° par rapport à l'axe longitudinal. De manière avantageuse, l'axe de décollement forme ainsi un angle compris entre 80° et 100° par rapport à la direction d'écoulement du flux d'air inverse. Le flux d'air inverse arrive de préférence sensiblement perpendiculairement au bord d'attaque de jonction.

Selon un aspect de l'invention, la lèvre d'entrée d'air comporte un bord d'attaque ondulé, de préférence, comprenant une pluralité de chevrons. Le bord d'attaque, défini par l'ensemble des bords d'attaque amont, des bords d'attaque de jonction et des bords d'attaque aval, présente ainsi une forme géométrique aérodynamique et présentant deux profils séparés longitudinalement.

Selon un aspect préféré de l'invention, le bord d'attaque amont de chaque portion épaisse comporte une forme incurvée. Selon un aspect préféré de l'invention, le bord d'attaque aval de chaque portion fine comporte une forme incurvée. Ceci permet de favoriser l'aérodynamisme et de présenter une forme plus déployée pour une action plus globale sur le flux d'air.

Selon un aspect de l'invention, le bord d'attaque amont de chaque portion épaisse comporte un profil convexe s'étendant circonférentiellement par rapport à l'axe longitudinal et dont la convexité est tournée vers l'amont. Selon un aspect de l'invention, le bord d'attaque aval de chaque portion fine comporte un profil concave s'étendant circonférentiellement par rapport à l'axe longitudinal et dont la concavité est tournée vers l'amont. Autrement dit, chaque portion épaisse pointe vers l'amont et chaque portion fine pointe vers l'aval. De préférence, le bord d'attaque amont de chaque portion épaisse comporte un profil convexe opposé au profil concave du bord d'attaque aval de chaque portion fine. Ceci permet d'assurer une répartition sensiblement équitable du bord d'attaque amont par rapport au bord d'attaque aval.

De préférence, les bords d'attaque amont comportant chacun un point amont, l'ensemble des points amont sont alignés transversalement par rapport à l'axe longitudinal, et de préférence, appartiennent à un cercle amont dont l'axe longitudinal traverse le centre. De préférence, les bords d'attaque aval comportant chacun un point amont, l'ensemble des points amont sont alignés transversalement par rapport à l'axe longitudinal, et de préférence, appartiennent à un cercle aval dont l'axe longitudinal traverse le centre. Ceci permet aux bords d'attaque amont d'agir ensemble sur le flux d'air amont et aux bords d'attaque aval d'agir ensemble sur le flux d'air inverse, pour plus d'efficacité.

Selon un aspect de l'invention, la lèvre d'entrée d'air comprend une enveloppe :
- définie, dans chaque plan radial d'une portion épaisse, par un rayon de courbure (R) en le bord d'attaque amont,
- définie, dans chaque plan radial d'une portion fine, par un rayon de courbure (r) en le bord d'attaque aval,
- les rayons de courbure vérifiant la relation suivante : R > 1,5 * r, et de préférence : R < 3 * r.

De préférence, les rayons de courbure vérifient la relation suivante : 1,8 * r < R < 2,2 • r. Ceci permet d'avoir un bord d'attaque amont suffisamment épais et un bord d'attaque suffisamment fin, tout en limitant la masse et en assurant la robustesse de l'entrée d'air. Les portions de jonction comportent de plus une forme aérodynamique qui assure la transition progressive entre les deux profils.

De préférence, chaque portion de jonction est définie dans un plan radial par un rayon de courbure R* en le bord d'attaque de jonction qui vérifie la relation suivante : r < R* < R.

Selon un aspect de l'invention, dans au moins un plan transversal situé en aval des bords d'attaque aval, chaque portion épaisse comporte une épaisseur radiale supérieure à une épaisseur radiale de chaque portion fine. Ceci permet de guider le flux d'air intérieur en aval des bords d'attaque amont lors d'une phase de poussée. Les portions épaisses délimitent avantageusement intérieurement à la nacelle des couloirs de circulation privilégiés pour le flux d'air intérieur tandis que les portions fines délimitent des couloirs de circulation privilégiés pour le flux d'air inverse.

De préférence, chaque portion épaisse s'étend en saillie vers l'intérieur de l'entrée d'air, de manière à ne pas modifier la forme extérieure de la lèvre d'entrée d'air et conserver son aérodynamisme.

L'invention concerne également l'ensemble d'une entrée d'air telle que décrite précédemment et d'une soufflante, formant de préférence les moyens d'inversion de poussée. Une soufflante avec des aubes à calage variable est avantageusement adaptée pour des ensembles propulsifs d'aéronef à fort taux de dilution, à savoir dont le rapport de la masse du flux d'air secondaire sur la masse du flux d'air primaire est supérieur à 16.

L'invention concerne de plus une nacelle d'ensemble propulsif d'aéronef, ledit ensemble propulsif d'aéronef s'étendant selon un axe longitudinal orienté d'amont en aval et comprenant une turbomachine comprenant une veine primaire radialement intérieure et une veine secondaire radialement extérieure configurées pour guider d'amont en aval respectivement un flux d'air primaire et un flux d'air secondaire lors d'une phase de poussée, ladite turbomachine comprenant à l'amont une soufflante montée rotative autour de l'axe longitudinal, ledit ensemble propulsif d'aéronef comprenant des moyens d'inversion de poussée configurés pour modifier le flux d'air secondaire en un flux d'air inverse circulant d'aval en amont dans la veine secondaire lors d'une phase d'inversion de poussée, ladite nacelle s'étendant extérieurement autour de la turbomachine et comprenant à son extrémité amont une entrée d'air telle que décrite précédemment.

L'invention concerne aussi un ensemble propulsif d'aéronef s'étendant selon un axe longitudinal orienté d'amont en aval et comprenant une turbomachine comprenant une veine primaire radialement intérieure et une veine secondaire radialement extérieure configurées pour guider d'amont en aval respectivement un flux d'air primaire et un flux d'air secondaire lors d'une phase de poussée, ladite turbomachine comprenant à l'amont une soufflante montée rotative autour de l'axe longitudinal, ledit ensemble propulsif d'aéronef comprenant des moyens d'inversion de poussée configurés pour modifier le flux d'air secondaire en un flux d'air inverse circulant d'aval en amont dans la veine secondaire lors d'une phase d'inversion de poussée, ledit ensemble propulsif d'aéronef comprenant une nacelle s'étendant extérieurement autour de la turbomachine et comprenant à son extrémité amont une entrée d'air telle que décrite précédemment, la soufflante formant de préférence les moyens d'inversion de poussée.

L'invention concerne par ailleurs un procédé d'utilisation d'une entrée d'air de nacelle d'ensemble propulsif d'aéronef telle que décrite précédemment, dans lequel :
- lors d'une phase de poussée, chaque portion épaisse de la lèvre d'entrée d'air sépare un flux d'air amont circulant d'amont en aval en un flux d'air extérieur guidé par la paroi extérieure et un flux d'air intérieur guidé par la paroi intérieure, et
- lors d'une phase d'inversion de poussée, chaque portion fine de la lèvre d'entrée d'air décolle un flux d'air inverse circulant d'aval en amont au niveau de la lèvre d'entrée d'air.

De manière avantageuse, un tel procédé est avantageusement exempt d'étape de déplacement et/ou de déformation de l'entrée d'air, celle-ci conservant sa forme lors d'une phase d'inversion de poussée, ce qui lui offre une architecture simple, robuste, pérenne et économique. Le procédé est par ailleurs simple et rapide à mettre en oeuvre, sans temps de latence pour passer d'une phase à l'autre.

L'invention concerne également un procédé d'utilisation d'un ensemble propulsif d'aéronef tel que décrit précédemment, dans lequel :
- lors d'une phase de poussée, chaque portion épaisse de la lèvre d'entrée d'air sépare un flux d'air amont circulant d'amont en aval en un flux d'air extérieur guidé par la paroi extérieure et un flux d'air intérieur guidé par la paroi intérieure, et
- lors d'une phase d'inversion de poussée, les moyens d'inversion de poussée sont activés et chaque portion fine de la lèvre d'entrée d'air décolle un flux d'air inverse circulant d'aval en amont au niveau de la lèvre d'entrée d'air.

De préférence, lors d'une phase d'inversion de poussée, le calage des aubes de la soufflante est modifié pour former le flux d'air inverse.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1A] est une représentation schématique en demi-coupe longitudinale d'un ensemble propulsif d'aéronef lors d'une phase de poussée selon l'art antérieur.
La [Fig.1B] est une représentation schématique en demi-coupe longitudinale de l'ensemble propulsif d'aéronef de la [Fig.1A] lors d'une phase d'inversion de poussée.
La [Fig.2A] est une représentation schématique en demi-coupe longitudinale d'un ensemble propulsif d'aéronef lors d'une phase de poussée selon une forme de réalisation de l'invention.
La [Fig.2B] est une représentation schématique en demi-coupe longitudinale de l'ensemble propulsif d'aéronef de la [Fig.2A] lors d'une phase d'inversion de poussée.
La [Fig.3] est une représentation schématique en perspective de l'entrée d'air de l'ensemble propulsif d'aéronef de la [Fig.2A] et de la [Fig.2B].
La [Fig.4] est une représentation schématique en vue longitudinale de l'entrée d'air de la [Fig.3].
La [Fig.5] est une représentation schématique selon trois coupes transversales de l'entrée d'air de la [Fig.3].
La [Fig.6] est une représentation schématique en perspective rapprochée de l'entrée d'air de la [Fig.3].
La [Fig.7] est une représentation schématique en coupe radiale d'une portion de jonction, d'une portion fine et d'une portion épaisse de l'entrée d'air de la [Fig.3].
La [Fig.8A] est une représentation schématique selon trois coupes transversales de l'entrée d'air selon une forme de réalisation alternative de l'invention.
La [Fig.8B], la [Fig.8C] et la [Fig.8D] sont des représentations schématiques en vue longitudinale rapprochée de l'entrée d'air selon trois formes de réalisation alternatives de l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

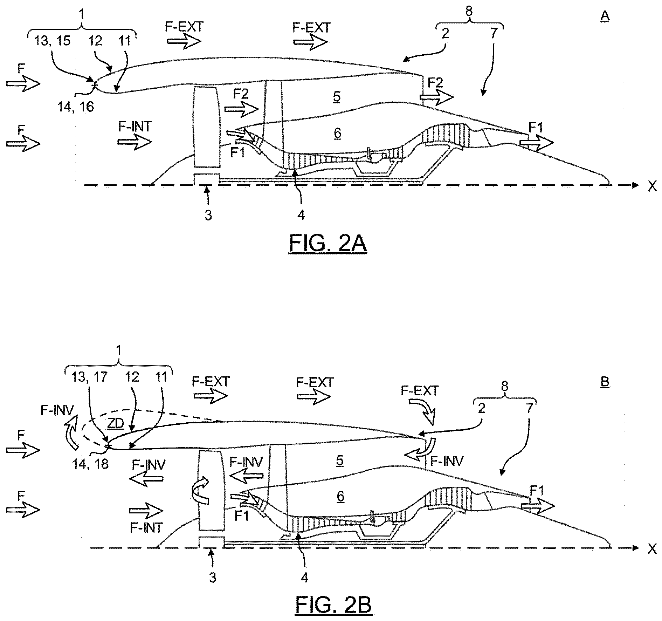

En référence aux figures 2A et 2B, l'invention concerne un ensemble propulsif d'aéronef 8 de profil aérodynamique innovant, notamment au niveau de l'entrée d'air 1, pour favoriser les performances à la fois lors d'une phase de poussée A et lors d'une phase d'inversion de poussée B.

Comme illustré sur la [Fig.2A] et décrit dans le préambule, l'ensemble propulsif d'aéronef 8 s'étend selon un axe longitudinal X orienté d'amont en aval et comprend une turbomachine 7 et une nacelle 2. La turbomachine 7 s'étend selon l'axe longitudinal X et est configurée pour permettre la propulsion de l'aéronef à partir de l'accélération d'un flux d'air intérieur F-INT circulant d'amont en aval dans la turbomachine 7. La nacelle 2 s'étend quant à elle extérieurement autour de la turbomachine 7 selon l'axe longitudinal X et permet de guider le flux d'air intérieur F-INT dans la turbomachine 7. Par la suite, les termes « amont » et « aval » sont définis par rapport à l'orientation de l'axe longitudinal X. Les termes « intérieur » et « extérieur » sont quant à eux définis selon la direction radiale par rapport à l'axe longitudinal X.

Comme illustré sur la [Fig.2A] et décrit dans le préambule, la turbomachine 7 est de type à double flux et comprend à l'amont une soufflante 3 montée rotative autour de l'axe longitudinal X pour accélérer le flux d'air intérieur F-INT d'amont en aval. La turbomachine 7 comprend également, en aval de la soufflante 3, une veine primaire 4, radialement intérieure, et une veine secondaire 5, radialement extérieure, qui sont séparées par un carter 6. Le carter 6 est configuré pour guider une première partie du flux d'air intérieur F-INT, dite flux d'air primaire F1, dans la veine primaire 4 pour la combustion du carburant et une deuxième partie du flux d'air intérieur F-INT, dite flux d'air secondaire F2, dans la veine secondaire 5 afin de générer la poussée de la turbomachine 7.

Toujours en référence à la [Fig.2A] et comme décrit dans le préambule, la nacelle 2 s'étend de manière radialement extérieure à la soufflante 3 et délimite de manière radialement extérieure la veine secondaire 5. La nacelle 2 comprend à son extrémité amont une entrée d'air 1 s'étendant de manière périphérique autour de l'axe longitudinal X. L'entrée d'air 1 comprend une paroi intérieure 11 tournée vers l'axe longitudinal X et une paroi extérieure 12 opposée à la paroi intérieure 11, reliées ensemble à l'amont par une lèvre d'entrée d'air 13. Comme illustré sur la [Fig.2A], la lèvre d'entrée d'air 13 permet de séparer un flux d'air amont F en le flux d'air intérieur F-INT guidé par la paroi intérieure 11 et un flux d'air extérieur F-EXT guidé par la paroi extérieure 12. La lèvre d'entrée d'air 13 comporte un bord d'attaque 14, défini dans chaque coupe radiale par le point de la lèvre d'entrée d'air 13 situé le plus en amont, l'ensemble des points formant une courbe fermée autour de l'axe longitudinal X.

En référence à la [Fig.2B] et comme décrit dans le préambule, la soufflante 3 est de type à calage variable, connue sous sa dénomination anglaise « Variable Pitch Fan » d'abréviation « VPF », c'est-à-dire qu'elle comprend des aubes dont l'angle de calage est piloté de manière à inverser le sens de circulation du flux d'air dans la veine secondaire 5. On distingue par la suite une phase de poussée A ([Fig.2A]) dans laquelle le flux d'air secondaire F2 circule d'amont en aval dans la veine secondaire 5 et une phase d'inversion de poussée B ([Fig.2B]) dans laquelle y circule un flux d'air inverse F-INV d'aval en amont pour réduire la distance de freinage d'un aéronef, notamment lors de l'atterrissage. En pratique, lors d'une phase d'inversion de poussée B, le flux d'air inverse F-INV circule d'aval en amont dans la veine secondaire 5 puis traverse la soufflante 3 et est guidé vers l'amont par la paroi intérieure 11 de l'entrée d'air 1. Le flux d'air inverse F-INV s'oppose alors au flux d'air amont F, notamment de manière radialement extérieure à proximité de la nacelle 2, ce qui permet un freinage. Le flux d'air inverse F-INV rejoint ensuite le flux d'air extérieur F-EXT qui est admis par l'extrémité aval de la nacelle 2 dans la veine secondaire 5. On précise que lors d'une phase d'inversion de poussée B, un flux d'air intérieur F-INT provenant du flux d'air amont F circule d'amont en aval au pied de la soufflante 3 pour alimenter le flux d'air primaire F1 de même qu'en phase de poussée A. Le flux d'air primaire F1 peut également être alimenté par une partie du flux d'air inverse F-INV qui contourne le carter 6.

D'autres moyens d'inversion de poussée pourraient être utilisés alternativement à la soufflante à calage variable 3. Il pourrait notamment être prévu d'obstruer au moins partiellement la veine secondaire 5 en aval de la soufflante 3, et de conjointement découvrir des grilles logées dans la nacelle 2 afin de former le flux d'air inverse F-INV. Un inverseur à grilles ou à volets pourrait être notamment utilisé. Une soufflante à calage variable 3 est particulièrement adaptée pour des ensembles propulsifs d'aéronef 8 à fort taux de dilution, i.e. dont le rapport de la masse du flux d'air secondaire F2 sur la masse du flux d'air primaire F1 est supérieur à 16, car elle permet d'optimiser la masse embarquée.

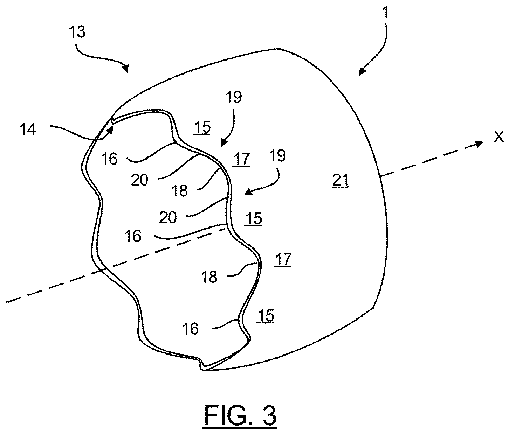

Pour favoriser les performances de l'ensemble propulsif d'aéronef 8 à la fois en phase de poussée A et d'inversion de poussée B, selon l'invention et en référence aux figures 2A, 2B et 3, la lèvre d'entrée d'air 13 comprend des portions épaisses 15 et des portions fines 17 réparties alternativement sur la circonférence de la lèvre d'entrée d'air 13. On précise que la lèvre d'entrée d'air 13 comporte une épaisseur qui est définie ici et par la suite radialement par rapport à l'axe longitudinal X.

Toujours selon l'invention et en référence aux figures 2A et 3, chaque portion épaisse 15 comporte un bord d'attaque amont 16 configuré pour séparer le flux d'air amont F en le flux d'air extérieur F-EXT guidé par la paroi extérieure 12 et le flux d'air intérieur F-INT guidé par la paroi intérieure 11, afin de favoriser une phase de poussée A. En référence aux figures 2B et 3, chaque portion fine 17 comporte quant à elle un bord d'attaque aval 18, situé longitudinalement en aval de chaque bord d'attaque amont 16, configuré pour générer une zone de décollement ZD du flux d'air inverse F-INV au niveau de la lèvre d'entrée d'air 13, afin de favoriser une phase d'inversion de poussée B.

De manière préférée, comme illustré sur la [Fig.3], la lèvre d'entrée d'air 13 comporte également des portions de jonctions 19 s'étendant entre chaque portion épaisse 15 et chaque portion fine 17. Chaque portion de jonction 19 comporte un bord d'attaque de jonction 20 configuré pour décoller le flux d'air inverse F-INV de manière complémentaire aux portions fines 17, afin de favoriser une phase d'inversion de poussée B.

Toujours dans l'exemple de la [Fig.3], la lèvre d'entrée d'air 13 comporte une structure fixe, exempte de partie mobile et/ou déformable, qui est à la fois adaptée pour la phase de poussée A et la phase d'inversion de poussée B. Plus précisément, la lèvre d'entrée d'air 13 comporte un profil amont et un profil aval configurés pour favoriser les performances respectivement lors d'une phase de poussée A et lors d'une phase d'inversion de poussée B. Le flux d'air amont F rencontre en effet tout d'abord le profil amont, à savoir les portions épaisses 15, tandis que le flux d'air inverse F-INV rencontre tout d'abord le profil aval, à savoir les portions fines 17. Le flux d'air amont F et le flux d'air inverse F-INV sont ainsi avantageusement majoritairement guidés respectivement par les portions épaisses 15 et les portions fines 17.

Comme illustré sur la [Fig.3], les portions épaisses 15, fines 17 et de jonction 19 sont organisées comme suit : une portion épaisse 15, une portion de jonction 19, une portion fine 17 et une portion de jonction 19 forment ensemble un motif élémentaire qui se répète sur toute la circonférence de l'entrée d'air 1, dans cet exemple huit fois. Le nombre de portions épaisses 15 et de portions fines 17 est égal pour favoriser de manière égale les phases de poussée A et d'inversion de poussée B. Le nombre de portions de jonction 19 est quant à lui deux fois supérieur à celui de portions épaisses 15, et donc de portions fines 17. De préférence, en notant n le nombre de portions épaisses 15 et N le nombre d'aubes de la soufflante 3, le nombre n de portions épaisses 15 vérifie la relation suivante, pour des raisons acoustiques : 0,5 * N < n < 2 * N, avec n ≠ N. Dans l'exemple de la [Fig.3], le nombre n de portions épaisses 15 est égal à huit.

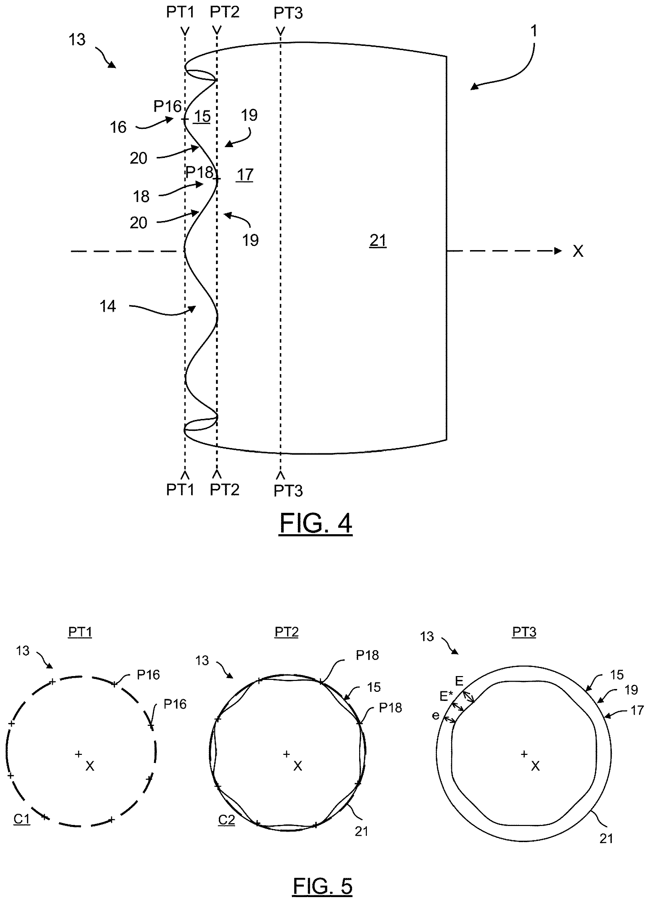

Dans l'exemple de la [Fig.4], l'ensemble des portions épaisses 15 comportent une forme et une taille identiques pour favoriser l'admission du flux d'air intérieur F-INT de manière homogène sur toute la circonférence de l'entrée d'air 1. De manière analogue, l'ensemble des portions fines 17 comportent une forme et une taille identiques pour favoriser le décollement du flux d'air inverse F-INV de manière homogène sur toute la circonférence de l'entrée d'air 1. Toujours dans cet exemple, les portions épaisses 15 et les portions fines 17 s'étendent sur une longueur circonférentielle égale pour favoriser tout autant la phase de poussée A et la phase d'inversion de poussée B. Il va de soi qu'au moins une partie des portions épaisses 15 et/ou des portions fines 17 pourrait(ent) comporter une forme et/ou une taille différente(s).

En référence à la [Fig.4], le bord d'attaque amont 16 de chaque portion épaisse 15 comporte un profil incurvé de forme convexe dont la convexité est orientée vers l'amont. Le bord d'attaque aval 18 de chaque portion fine 17 comporte quant à lui un profil incurvé de forme concave dont la concavité est orientée vers l'amont. On précise que le bord d'attaque amont 16 d'une portion épaisse 15 est défini dans chaque coupe radiale de ladite portion épaisse 15 par le point de la lèvre d'entrée d'air 13 situé le plus en amont. De même, le bord d'attaque aval 18 d'une portion fine 17 est défini dans chaque coupe radiale de ladite portion fine 17 par le point de la lèvre d'entrée d'air 13 situé le plus en amont. Une telle forme incurvée des bords d'attaque amont 16 et aval 18 favorise l'aérodynamisme et facilite leur jonction pour obtenir une lèvre d'entrée 13 de forme simple et continue. De préférence, les bords d'attaque amont 16 comportent un profil opposé à celui des bords d'attaque aval 18 selon un axe de symétrie transversal à l'axe longitudinal X.

Comme illustré sur les figures 4 et 5, chaque bord d'attaque amont 16, comporte un point amont P16, défini comme le point du bord d'attaque amont 16 situé le plus en amont. Dans l'exemple des figures 4 et 5, les points amont P16 des bords d'attaque amont 16 sont alignés dans un plan transversal PT1 par rapport à l'axe longitudinal X, et de préférence, appartiennent à un même cercle C1 dans le plan transversal PT1 et de centre traversé par l'axe longitudinal X ([Fig.5]). De manière analogue, chaque bord d'attaque aval 18, comporte un point amont P18, défini comme le point du bord d'attaque aval 18 situé le plus en amont. Dans l'exemple des figures 4 et 5, les points amont P18 des bords d'attaque aval 18 sont alignés dans un plan transversal PT2 situé en aval du plan transversal PT1, et de préférence, appartiennent à un même cercle C2 dans le plan transversal PT2 et de centre traversé par l'axe longitudinal X ([Fig.5]). Un tel alignement permet un guidage plus homogène et global du flux d'air amont F en phase de poussée A et du flux d'air inverse F-INV en phase d'inversion de poussée B.

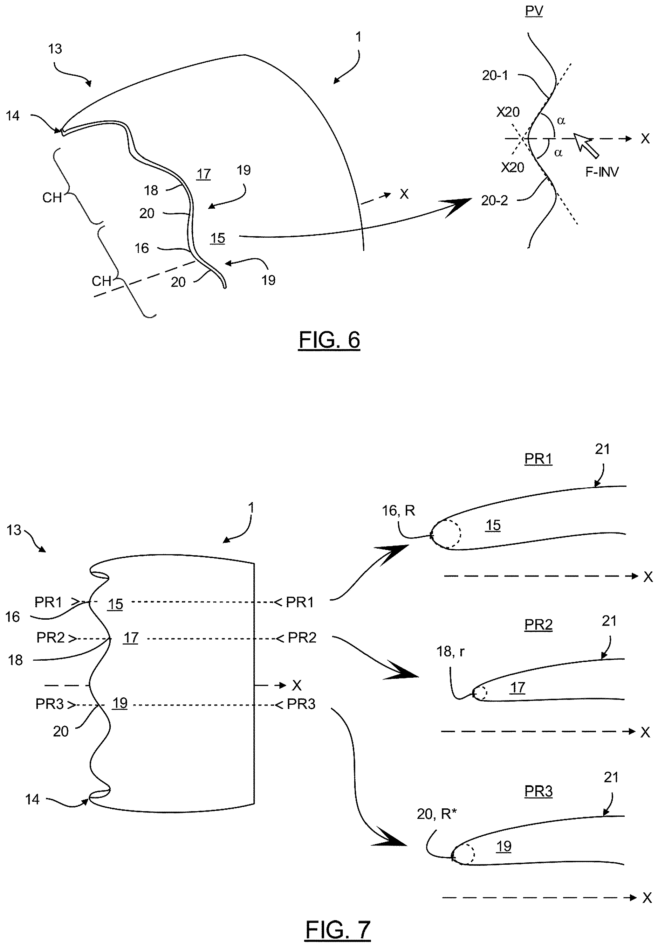

En référence à la [Fig.6] et comme décrit précédemment, chaque portion de jonction 19 relie une portion épaisse 15 et une portion fine 17 et chaque bord d'attaque de jonction 20 relie un bord d'attaque amont 16 et un bord d'attaque aval 18. Les portions de jonction 19 sont configurées pour décoller le flux d'air inverse F-INV de manière auxiliaire aux portions fines 17. Plus précisément, les portions de jonction 19 permettent de décoller le flux d'air inverse F-INV en giration suite à son passage à travers la soufflante 3. Dans les faits, le flux d'air inverse F-INV circule au niveau de la lèvre d'entrée d'air 13 suivant une direction formant avec l'axe longitudinal X un angle compris entre 30° et 45°.

Dans l'exemple de la [Fig.6], les portions de jonction 19 s'étendent sur une longueur circonférentielle égale de manière à agir de manière homogène et globale sur le flux d'air inverse F-INV. De plus, les bords d'attaque de jonction 20 comportent de préférence une forme identique, les bords d'attaque de jonction 20 reliant le même bord d'attaque amont 16, dits « bord d'attaque de jonction droit 20-1 » et « bord d'attaque de jonction gauche 20-2 », étant orientés de manière opposée suivant un axe de symétrie longitudinal. On précise que le bord d'attaque de jonction 20 d'une portion de jonction 19 est défini dans chaque coupe radiale de ladite portion de jonction 19 par le point de la lèvre d'entrée d'air 13 situé le plus en amont. Il va de soi qu'au moins une partie des portions de jonction 19 pourrait comporter une forme et/ou une taille différente(s).

Toujours dans l'exemple de la [Fig.6], chaque bord d'attaque de jonction 20 s'étend, en projection suivant un plan tangentiel PV à la lèvre d'entrée d'air 13, selon un axe de décollement X20 formant un angle α par rapport à l'axe longitudinal X compris entre 35° et 70°. L'angle α des bords d'attaque de jonction droits 20-1 est égal et orienté de manière opposée à celui des bords d'attaque de jonction gauches 20-2. De manière avantageuse, le flux d'air inverse F-INV circule ainsi sensiblement perpendiculairement par rapport aux bords d'attaque de jonction droits 20-1, ce qui favorise le décollement du flux d'air inverse F-INV. La direction d'écoulement du flux d'air inverse F-INV forme de préférence un angle avec l'axe de décollement X20 des bords d'attaque de jonction droits 20-1 compris entre 80° et 100°. Il va de soi que le flux d'air inverse F-INV pourrait alternativement circuler sensiblement perpendiculairement par rapport aux bords d'attaque de jonction gauches 20-2 en lieu et place des bords d'attaque de jonction droits 20-1.

En référence à la [Fig.6], le bord d'attaque 14 de la lèvre d'entrée d'air 13 est ainsi formé par l'ensemble des bords d'attaque amont 16, des bords d'attaque de jonction 20 et des bords d'attaque aval 18 et se présente sous la forme d'une courbe fermée ondulée, de préférence, comportant un ensemble de chevrons CH. Un chevron CH correspond à l'ensemble d'un bord d'attaque amont 16, des deux demi bords d'attaque aval 18 adjacents et des deux bords d'attaque de jonction 20 les reliant. Une telle forme est avantageusement simple et présente deux profils séparés longitudinalement pour la phase de poussée A et la phase d'inversion de poussée B.

En référence à la [Fig.7], la lèvre d'entrée d'air 13 comporte une enveloppe 21 définie dans chaque plan radial par un rayon de courbure en le bord d'attaque 14, le rayon de courbure variant le long de la circonférence de la lèvre d'entrée d'air 13. Plus précisément, l'enveloppe 21 est définie :
- dans chaque plan radial PR1 d'une portion épaisse 15, par un rayon de courbure R en le bord d'attaque amont 16,
- dans chaque plan radial PR2 d'une portion fine 17, par un rayon de courbure r en le bord d'attaque aval 18, et
- dans chaque plan radial PR3 d'une portion de jonction 19, par un rayon de courbure R* en le bord d'attaque de jonction 20.

Comme illustré sur la [Fig.7], le rayon de courbure R en un bord d'attaque amont 16 varie sur la circonférence de la portion épaisse 15 et est maximal au niveau du point amont P16. De même, le rayon de courbure r en un bord d'attaque aval 18 varie sur la circonférence de la portion fine 17 et est minimal au niveau du point amont P18. De préférence, les rayons de courbure R, r vérifient la relation suivante R > 1,5 * r, de préférence encore R < 3 * r, et préférentiellement 1,8 * r < R < 2,2 * r. L'épaisseur d'une portion épaisse 15 à proximité du bord d'attaque amont 16 est ainsi sensiblement deux fois plus importante que celle d'une portion fine 17 à proximité du bord d'attaque aval 18. Le rayon de courbure R* en un bord d'attaque de jonction 19 décroit quant à lui d'amont en aval, de préférence de manière linéaire, et vérifie la relation suivante : r < R* < R. Ceci permet de favoriser à la fois la séparation du flux d'air amont F ainsi que le décollement du flux d'air inverse F-INV tout en assurant l'aérodynamisme et la continuité de la lèvre d'entrée d'air 13.

En référence aux figures 4 et 5, chaque portion épaisse 15 comporte de préférence une épaisseur E supérieure à l'épaisseur e d'une portion fine 17 dans un même plan transversal PT3 situé en aval des bords d'attaque aval 18, et des donc des plans transversaux PT1, PT2. Chaque portion de jonction 19 comporte quant à elle dans le plan transversal PT3 une épaisseur E* vérifiant la relation suivante : e < E* < E. De préférence, comme illustré sur la [Fig.5], chaque portion épaisse 15 s'étend en saillie vers l'intérieur par rapport aux portions fines 17 dans le plan transversal PT3. Ainsi, les portions épaisses 15 et les portions fines 17 forment des couloirs de circulation pour le flux d'air amont F et le flux d'air inverse F-INV tout le long de l'entrée d'air 1. L'entrée d'air 1 conserve de plus une forme extérieure aérodynamique semblable à celle de l'art antérieur, seule sa forme intérieure étant modifiée.

On décrit par la suite un procédé d'utilisation de l'ensemble propulsif d'aéronef 8 selon l'invention lors d'une phase de poussée A et lors d'une phase d'inversion de poussée B.

En référence à la [Fig.2A], lors d'une phase de poussée A, lors d'un décollage ou de conditions de croisière à titre d'exemples, les aubes de la soufflante à calage variable 3 sont orientées de manière à laisser circuler le flux d'air d'amont en aval. Le flux d'air amont F circulant d'amont en aval arrive au niveau des bords d'attaque amont 16 des portions épaisses 15, qui séparent le flux d'air amont F en le flux d'air extérieur F-EXT et le flux d'air intérieur F-INT. Les portions épaisses 15 favorisent avantageusement la séparation du flux d'air amont F et donc l'admission du flux d'air intérieur F-INT vers la turbomachine 7 pour assurer sa poussée.

En référence à la [Fig.2B], lors d'une phase d'inversion de poussée B, lors d'un freinage ou d'un atterrissage à titre d'exemples, le calage des aubes de la soufflante 3 est modifié pour inverser le sens du flux d'air secondaire F2 dans la veine secondaire 5. Un flux d'air inverse F-INV circule ainsi d'aval en amont et traverse la soufflante 3 où il est entraîné en giration. Le flux d'air inverse F-INV arrive alors au niveau des bords d'attaque aval 18 des portions fines 17 et des bords d'attaque de jonction 20 des portions de jonction 19 qui favorisent ensemble son décollement de la lèvre d'entrée d'air 13. Une zone de décollement ZD se forme alors au contact de la lèvre d'entrée d'air 13 ce qui évite toute dépression locale néfaste à l'inversion de poussée B.

Le passage d'une phase de poussée A à une phase d'inversion de poussée B est avantageusement simple et rapide à réaliser, ne nécessitant que de modifier l'orientation des aubes de la soufflante 3. Aucune étape de déplacement ou de déformation de l'entrée d'air 1 n'est nécessaire comme dans l'art antérieur. Le profil de l'entrée d'air 1 reste inchangé entre la phase de poussée A et la phase d'inversion de poussée B.

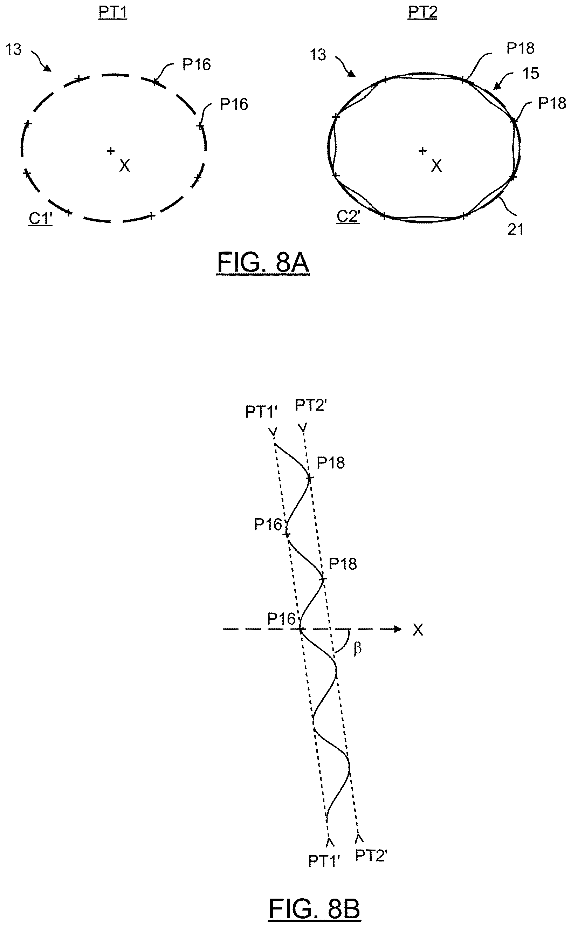

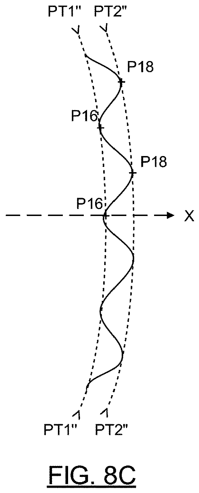

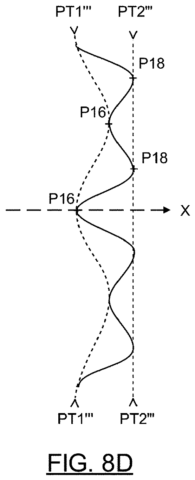

Les figures 8A, 8B, 8C et 8D illustrent des formes de réalisation alternatives de l'invention précédemment décrite. Dans l'exemple de la [Fig.8A] d'une nacelle 2 de forme elliptique d'axe longitudinal X, les points amont P16 des bords d'attaque amont 16 appartiennent à une ellipse C1' dans le plan transversal PT1 et de centre traversé par l'axe longitudinal X. De manière analogue, les points amont P18 des bords d'attaque aval 18 appartiennent à une ellipse C2' dans le plan transversal PT2 et de centre traversé par l'axe longitudinal X. Il va de soi que les points amont P16 des bords d'attaque amont 16 pourraient appartenir à une courbe fermée de forme quelconque dans le plan transversal PT1, autre que le cercle C1 de la [Fig.5] et l'ellipse C1' de la [Fig.8A], de manière à s'adapter à la forme de nacelle 2 notamment. Idem pour les points amont P18 des bords d'attaque aval 18. Il va également de soi que la courbe fermée des points amont P16 des bords d'attaque amont 16 pourrait être différente de celle des points amont P18 des bords d'attaque aval 18.

Par ailleurs, il va de soi que les points amont P16 des bords d'attaque amont 16 pourraient ne pas être alignés dans un plan transversal PT1. Idem pour les points amont P18 des bords d'attaque aval P18. Dans l'exemple de la [Fig.8B], les points amont P16 appartiennent ainsi à un plan incliné PT1' formant un angle β par rapport à l'axe longitudinal X dans un plan circonférentiel. Les points amont P18 des bords d'attaque aval 18 appartiennent quant à eux à un plan incliné PT2' parallèle au plan incliné PT1' dans cet exemple. La [Fig.8C] illustre quant à elle un autre exemple dans lequel les points amont P16, P18 des bords d'attaque amont 16 et aval 18 appartiennent à une courbe fermée incurvée PT1", PT2" dans un plan circonférentiel, de forme concave dont la concavité est tournée vers l'amont dans cet exemple. Il va également de soi que les points amont P16 des bords d'attaque amont 16 pourraient être alignés dans un plan transversal PT1 mais pas les points amont P18 des bords d'attaque aval 18, ou inversement comme illustré sur la [Fig.8D]. Dans cet exemple, les points amont P18 des bords d'attaque aval 18 sont alignés dans un plan transversal PT2 mais pas les points amont P16 des bords d'attaque amont. Ceci permet d'obtenir des chevrons de différentes longueurs.

## Revendications

1. Entrée d'air (1) de nacelle (2) d'ensemble propulsif d'aéronef (8), ledit ensemble propulsif d'aéronef (8) s'étendant selon un axe longitudinal (X) orienté d'amont en aval et comprenant une turbomachine (7) comprenant une veine primaire (4) radialement intérieure et une veine secondaire (5) radialement extérieure configurées pour guider d'amont en aval respectivement un flux d'air primaire (F1) et un flux d'air secondaire (F2) lors d'une phase de poussée (A), ladite turbomachine (7) comprenant à l'amont une soufflante (3) montée rotative autour de l'axe longitudinal (X), ledit ensemble propulsif d'aéronef (8) comprenant des moyens d'inversion de poussée configurés pour modifier le flux d'air secondaire (F2) en un flux d'air inverse (F-INV) circulant d'aval en amont dans la veine secondaire (5) lors d'une phase d'inversion de poussée (B), ladite nacelle (2) s'étendant extérieurement autour de la turbomachine (7) et comprenant à son extrémité amont l'entrée d'air (1), ladite entrée d'air (1) s'étendant de manière périphérique autour de l'axe longitudinal (X) et comprenant une paroi intérieure (11) tournée vers l'axe longitudinal (X) et une paroi extérieure (12) opposée à la paroi intérieure (11) qui sont reliées à l'amont par une lèvre d'entrée d'air (13), entrée d'air (1) **caractérisée par le fait que :**
• la lèvre d'entrée d'air (13) comporte une épaisseur définie radialement par rapport à l'axe longitudinal (X) et comprend une pluralité de portions épaisses (15) et une pluralité de portions fines (17) réparties alternativement sur la circonférence de la lèvre d'entrée d'air (13),
• chaque portion épaisse (15) comporte un bord d'attaque amont (16) configuré pour séparer un flux d'air amont (F) circulant d'amont en aval en un flux d'air extérieur (F-EXT) guidé par la paroi extérieure (12) et un flux d'air intérieur (F-INT) guidé par la paroi intérieure (11), afin de favoriser une phase de poussée (A),
• chaque portion fine (17) comporte un bord d'attaque aval (18), situé longitudinalement en aval de chaque bord d'attaque amont (16), configuré pour décoller le flux d'air inverse (F-INV) au niveau de la lèvre d'entrée d'air (13), afin de favoriser une phase d'inversion de poussée (B).

2. Entrée d'air (1) selon la revendication 1, dans laquelle la lèvre d'entrée d'air (13) comprend une pluralité de portions de jonction (19) s'étendant entre chaque portion épaisse (15) et chaque portion fine (17), chaque portion de jonction (19) comportant un bord d'attaque de jonction (20), de manière à décoller le flux d'air inverse (F-INV) en giration, afin de favoriser une phase d'inversion de poussée (B).

3. Entrée d'air (1) selon la revendication 2, dans laquelle chaque bord d'attaque de jonction (20) s'étend, en projection dans un plan tangentiel (PV) à la lèvre d'entrée d'air (13), selon un axe de décollement (X20) formant avec l'axe longitudinal (X) un angle (α) compris entre 35° et 70°.

4. Entrée d'air (1) selon l'une des revendications 1 à 3, dans laquelle la lèvre d'entrée d'air (13) comporte un bord d'attaque (14) ondulé, de préférence, comprenant une pluralité de chevrons (CH).

5. Entrée d'air (1) selon l'une des revendications 1 à 4, dans laquelle le bord d'attaque amont (16) de chaque portion épaisse (15) comporte un profil convexe s'étendant circonférentiellement par rapport à l'axe longitudinal (X) et dont la convexité est tournée vers l'amont.

6. Entrée d'air (1) selon l'une des revendications 1 à 5, dans laquelle le bord d'attaque aval (18) de chaque portion fine (17) comporte un profil concave s'étendant circonférentiellement par rapport à l'axe longitudinal (X) et dont la concavité est tournée vers l'amont.

7. Entrée d'air (1) selon l'une des revendications 1 à 6, dans laquelle la lèvre d'entrée d'air (13) comprend une enveloppe (21) :
• définie, dans chaque plan radial (PR1) d'une portion épaisse (15), par un rayon de courbure (R) en le bord d'attaque amont (16),
• définie, dans chaque plan radial (PR2) d'une portion fine (17), par un rayon de courbure (r) en le bord d'attaque aval (18),
• les rayons de courbure (R, r) vérifiant la relation suivante : R > 1,5 * r, et de préférence : R < 3 * r.

8. Entrée d'air (1) selon l'une des revendications 1 à 7, dans laquelle, dans au moins un plan transversal (PT3) situé en aval des bords d'attaque aval (18), chaque portion épaisse (15) comporte une épaisseur radiale (E) supérieure à une épaisseur radiale (e) de chaque portion fine (17), chaque portion épaisse (15) s'étendant de préférence en saillie vers l'intérieur de l'entrée d'air (1).

9. Ensemble propulsif d'aéronef (8) s'étendant selon un axe longitudinal (X) orienté d'amont en aval et comprenant une turbomachine (7) comprenant une veine primaire (4) radialement intérieure et une veine secondaire (5) radialement extérieure configurées pour guider d'amont en aval respectivement un flux d'air primaire (F1) et un flux d'air secondaire (F2) lors d'une phase de poussée (A), ladite turbomachine (7) comprenant à l'amont une soufflante (3) montée rotative autour de l'axe longitudinal (X), ledit ensemble propulsif d'aéronef (8) comprenant des moyens d'inversion de poussée configurés pour modifier le flux d'air secondaire (F2) en un flux d'air inverse (F-INV) circulant d'aval en amont dans la veine secondaire (5) lors d'une phase d'inversion de poussée (B), ledit ensemble propulsif d'aéronef (8) comprenant une nacelle (2) s'étendant extérieurement autour de la turbomachine (7) et comprenant à son extrémité amont une entrée d'air (1) selon l'une des revendications 1 à 8, la soufflante (3) formant de préférence les moyens d'inversion de poussée.

10. Procédé d'utilisation d'une entrée d'air (1) de nacelle (2) d'ensemble propulsif d'aéronef (8) selon l'une des revendications 1 à 8, dans lequel
• lors d'une phase de poussée (A), chaque portion épaisse (15) de la lèvre d'entrée d'air (13) sépare un flux d'air amont (F) circulant d'amont en aval en un flux d'air extérieur (F-EXT) guidé par la paroi extérieure (12) et un flux d'air intérieur (F-INT) guidé par la paroi intérieure (11), et
• lors d'une phase d'inversion de poussée (B), chaque portion fine (17) de la lèvre d'entrée d'air (13) décolle un flux d'air inverse (F-INV) circulant d'aval en amont au niveau de la lèvre d'entrée d'air (13).

## Patentansprüche

1. Lufteinlass (1) der Gondel (2) einer Luftfahrzeug-Antriebseinheit (8), wobei sich die Luftfahrzeug-Antriebseinheit (8) gemäß einer Längsachse (X) erstreckt, die von stromaufwärts nach stromabwärts gerichtet ist, und eine Turbomaschine (7) umfasst, die einen radial inneren Primärkanal (4) und einen radial äußeren Sekundärkanal (5) umfasst, die ausgelegt sind, um von stromaufwärts nach stromabwärts jeweils einen Primärluftstrom (F1) und einen Sekundärluftstrom (F2) während einer Schubphase (A) zu führen, wobei die Turbomaschine (7) stromaufwärts ein Gebläse (3) umfasst, das um die Längsachse (X) drehbar angebracht ist, wobei die Luftfahrzeug-Antriebseinheit (8) Schubumkehrmittel umfasst, die ausgelegt sind, um den Sekundärluftstrom (F2) in einen umgekehrten Luftstrom (F-INV) umzuwandeln, der während einer Schubumkehrphase (B) von stromabwärts nach stromaufwärts im Sekundärkanal (5) strömt, wobei sich die Gondel (2) außen um die Turbomaschine (7) herum erstreckt und an ihrem stromaufwärts gelegenen Ende den Lufteinlass (1) umfasst, wobei sich der Lufteinlass (1) peripher um die Längsachse (X) erstreckt und eine der Längsachse (X) zugewandte Innenwand (11) und eine der Innenwand (11) gegenüberliegende Außenwand (12) umfasst, die stromaufwärts durch eine Lufteinlasslippe (13) verbunden sind, wobei der Lufteinlass (1) **dadurch gekennzeichnet ist, dass**:
• die Lufteinlasslippe (13) eine Dicke aufweist, die radial zur Längsachse (X) definiert ist, und eine Vielzahl von dicken Abschnitten (15) und eine Vielzahl von dünnen Abschnitten (17) umfasst, die abwechselnd auf dem Umfang der Lufteinlasslippe (13) verteilt sind,
• jeder dicke Abschnitt (15) eine stromaufwärts gelegene Vorderkante (16) aufweist, die ausgelegt ist, um einen stromaufwärts gelegenen Luftstrom (F), der von stromaufwärts nach stromabwärts zirkuliert, in einen Außenluftstrom (F-EXT), der von der Außenwand (12) geführt wird, und einen Innenluftstrom (F-INT), der von der Innenwand (11) geführt wird, zu trennen, um eine Schubphase (A) zu begünstigen,
• jeder dünne Abschnitt (17) eine stromabwärts gelegene Vorderkante (18) aufweist, die sich in Längsrichtung stromabwärts von jeder stromaufwärts gelegenen Vorderkante (16) befindet und ausgelegt ist, um den umgekehrten Luftstrom (F-INV) im Bereich der Lufteinlasslippe (13) zu lösen, um eine Schubumkehrphase (B) zu begünstigen.

2. Lufteinlass (1) nach Anspruch 1, wobei die Lufteinlasslippe (13) eine Vielzahl von Verbindungsabschnitten (19) umfasst, die sich zwischen jedem dicken Abschnitt (15) und jedem dünnen Abschnitt (17) erstrecken, wobei jeder Verbindungsabschnitt (19) eine Verbindungsvorderkante (20) aufweist, um den umgekehrten Luftstrom (F-INV) beim Kreisen zu lösen, um eine Schubumkehrphase (B) zu begünstigen.

3. Lufteinlass (1) nach Anspruch 2, wobei sich jede Verbindungsvorderkante (20) in der Projektion in einer Tangentialebene (PV) zur Lufteinlasslippe (13) gemäß einer Ablöseachse (X20) erstreckt, die mit der Längsachse (X) einen Winkel (α) zwischen 35° und 70° bildet.

4. Lufteinlass (1) nach einem der Ansprüche 1 bis 3, wobei die Lufteinlasslippe (13) vorzugsweise eine gewellte Vorderkante (14) aufweist, die eine Vielzahl von Zacken (CH) umfasst.

5. Lufteinlass (1) nach einem der Ansprüche 1 bis 4, wobei die stromaufwärts gelegene Vorderkante (16) jedes dicken Abschnitts (15) ein konvexes Profil aufweist, das sich in Bezug auf die Längsachse (X) umfanggemäß erstreckt und dessen Konvexität nach stromaufwärts gerichtet ist.

6. Lufteinlass (1) nach einem der Ansprüche 1 bis 5, wobei die stromabwärts gelegene Vorderkante (18) jedes dünnen Abschnitts (17) ein konkaves Profil aufweist, das sich in Bezug auf die Längsachse (X) umfanggemäß erstreckt und dessen Konkavität nach stromaufwärts gerichtet ist.

7. Lufteinlass (1) nach einem der Ansprüche 1 bis 6, wobei die Lufteinlasslippe (13) eine Hülle (21) umfasst:
• die in jeder radialen Ebene (PR1) eines dicken Abschnitts (15) durch einen Krümmungsradius (R) an der stromaufwärts gelegenen Vorderkante (16) definiert ist,
• die in jeder radialen Ebene (PR2) eines dünnen Abschnitts (17) durch einen Krümmungsradius (r) an der stromabwärts gelegenen Vorderkante (18) definiert ist,
• wobei die Krümmungsradien (R, r) die folgende Relation erfüllen: R > 1,5 * r und vorzugsweise R < 3 * r.

8. Lufteinlass (1) nach einem der Ansprüche 1 bis 7, wobei in mindestens einer Querebene (PT3) stromabwärts der stromabwärts gelegenen Vorderkanten (18) jeder dicke Abschnitt (15) eine radiale Dicke (E) aufweist, die größer ist als eine radiale Dicke (e) jedes dünnen Abschnitts (17), wobei sich jeder dicke Abschnitt (15) vorzugsweise vorspringend in das Innere des Lufteinlasses (1) erstreckt.

9. Luftfahrzeug-Antriebseinheit (8), die sich gemäß einer von stromaufwärts nach stromabwärts gerichteten Längsachse (X) erstreckt und eine Turbomaschine (7) mit einem radial inneren Primärkanal (4) und einem radial äußeren Sekundärkanal (5) umfasst, die ausgelegt sind, um von stromaufwärts nach stromabwärts jeweils einen Primärluftstrom (F1) und einen Sekundärluftstrom (F2) während einer Schubphase (A) zu führen, wobei die Turbomaschine (7) stromaufwärts ein Gebläse (3) umfasst, das um die Längsachse (X) drehbar angebracht ist, wobei die Luftfahrzeug-Antriebseinheit (8) Schubumkehrmittel umfasst, die ausgelegt sind, um den Sekundärluftstrom (F2) in einen umgekehrten Luftstrom (F-INV) umzuwandeln, der während einer Schubumkehrphase (B) von stromabwärts nach stromaufwärts im Sekundärkanal (5) strömt, wobei die Luftfahrzeug-Antriebseinheit (8) eine Gondel (2) umfasst, die sich außen um die Turbomaschine (7) herum erstreckt und an ihrem stromaufwärts gelegenen Ende einen Lufteinlass (1) nach einem der Ansprüche 1 bis 8 umfasst, wobei das Gebläse (3) vorzugsweise die Schubumkehrmittel bildet.

10. Verfahren zur Verwendung eines Lufteinlasses (1) einer Gondel (2) einer Luftfahrzeug-Antriebseinheit (8) nach einem der Ansprüche 1 bis 8, wobei:
• während einer Schubphase (A) jeder dicke Abschnitt (15) der Lufteinlasslippe (13) einen stromaufwärts gerichteten Luftstrom (F), der von stromaufwärts nach stromabwärts strömt, in einen von der Außenwand (12) geführten Außenluftstrom (F-EXT) und einen von der Innenwand (11) geführten Innenluftstrom (F-INT) trennt, und
• in einer Schubumkehrphase (B) jeder dünne Abschnitt (17) der Lufteinlasslippe (13) einen umgekehrten Luftstrom (F-INV) löst, der im Bereich der Lufteinlasslippe (13) von stromabwärts nach stromaufwärts strömt.

## Claims

1. Air inlet (1) of a nacelle (2) of an aircraft propulsion assembly (8), said aircraft propulsion assembly (8) extending along a longitudinal axis (X) oriented from upstream to downstream and comprising a turbine engine (7) comprising a radially inner primary flow path (4) and a radially outer secondary flow path (5) configured to guide from upstream to downstream respectively a primary air flow (F1) and a secondary air flow (F2) during a thrust phase (A), said turbine engine (7) comprising upstream a fan (3) rotatably mounted about the longitudinal axis (X), said aircraft propulsion assembly (8) comprising thrust reverse means configured to modify the secondary air flow (F2) into a reverse air flow (F-INV) circulating from downstream to upstream in the secondary flow path (5) during a reverse thrust phase (B), said nacelle (2) extending outwardly around the turbine engine (7) and comprising at its upstream end the air inlet (1), said air inlet (1) extending peripherally around the longitudinal axis (X) and comprising an inner wall (11) turned towards the longitudinal axis (X) and an outer wall (12) opposite the inner wall (11) which are connected upstream by an air inlet lip (13), air inlet (1) **characterized by the fact that:**
• the air inlet lip (13) comprises a thickness defined radially with respect to the longitudinal axis (X) and comprises a plurality of thick portions (15) and a plurality of thin portions (17) distributed alternately over the circumference of the air inlet lip (13),
• each thick portion (15) comprises an upstream leading edge (16) configured to separate an upstream air flow (F) circulating from upstream to downstream into an outer air flow (F-EXT) guided by the outer wall (12) and an inner air flow (F-INT) guided by the inner wall (11), so as to promote a thrust phase (A),
• each thin portion (17) comprises a downstream leading edge (18), located longitudinally downstream from each upstream leading edge (16), configured to detach the reverse air flow (F-INV) at the air inlet lip (13), so as to promote a reverse thrust phase (B).

2. Air inlet (1) according to claim 1, wherein the air inlet lip (13) comprises a plurality of junction portions (19) extending between each thick portion (15) and each thin portion (17), each junction portion (19) comprising a junction leading edge (20), so as to detach the reverse air flow (F-INV) in gyration, so as to promote a reverse thrust phase (B).

3. Air inlet (1) according to claim 2, wherein each junction leading edge (20) extends, projected in a tangential plane (PV) to the air inlet lip (13), along a detachment axis (X20) forming with the longitudinal axis (X) an angle (α) between 35° and 70°.

4. Air inlet (1) according to one of claims 1 to 3, wherein the air inlet lip (13) comprises a wavy leading edge (14), preferably comprising a plurality of chevrons (CH).

5. Air inlet (1) according to one of claims 1 to 4, wherein the upstream leading edge (16) of each thick portion (15) comprises a convex profile extending circumferentially with respect to the longitudinal axis (X) and the convexity of which is turned upstream.

6. Air inlet (1) according to any of claims 1 to 5, wherein the downstream leading edge (18) of each thin portion (17) comprises a concave profile extending circumferentially with respect to the longitudinal axis (X) and the concavity of which is turned upstream.

7. Air inlet (1) according to one of claims 1 to 6, wherein the air inlet lip (13) comprises a casing (21):
• defined, in each radial plane (PR1) of a thick portion (15), by a radius of curvature (R) at the upstream leading edge (16),
• defined, in each radial plane (PR2) of a thin portion (17), by a radius of curvature (r) at the downstream leading edge (18),
• the radii of curvature (R, r) verifying the following relationship: R > 1.5 * r, and preferably: R < 3 * r.

8. Air inlet (1) according to one of claims 1 to 7, wherein, in at least one transverse plane (PT3) located downstream of the downstream leading edges (18), each thick portion (15) comprises a radial thickness (E) greater than a radial thickness (e) of each thin portion (17), each thick portion (15) preferably extending protruding toward the inside of the air inlet (1).

9. Aircraft propulsion assembly (8) extending along a longitudinal axis (X) oriented from upstream to downstream and comprising a turbine engine (7) comprising a radially inner primary flow path (4) and a radially outer secondary flow path (5) configured to guide from upstream to downstream respectively a primary air flow (F1) and a secondary air flow (F2) during a thrust phase (A), said turbine engine (7) comprising upstream a fan (3) rotatably mounted about the longitudinal axis (X), said aircraft propulsion assembly (8) comprising thrust reverse means configured to modify the secondary air flow (F2) into a reverse air flow (F-INV) circulating from downstream to upstream in the secondary flow path (5) during a reverse thrust phase (B), said aircraft propulsion assembly (8) comprising a nacelle (2) extending outwardly around the turbine engine (7) and comprising at its upstream end an air inlet (1) according to one of claims 1 to 8, the fan (3) preferably forming the thrust reverse means.

10. Method of using a nacelle (2) air inlet (1) of an aircraft propulsion assembly (8) according to one of claims 1 to 8, wherein:
• during a thrust phase (A), each thick portion (15) of the air inlet lip (13) separates an upstream air flow (F) circulating from upstream to downstream into an outer air flow (F-EXT) guided by the outer wall (12) and an inner air flow (F-INT) guided by the inner wall (11), and
• during a reverse thrust phase (B), each thin portion (17) of the air inlet lip (13) detaches a reverse air flow (F-INV) flowing from downstream to upstream at the air inlet lip (13).
